# EUROPEAN PATENT APPLICATION

(11) **EP 2 538 676 A2**
(43) Date of publication of application: **26.12.2012**
(21) Application number: 12169157.0
(22) Date of filing: 27.02.2004
(51) Int. Cl.: H04N 7/26, H04N 7/34, H04N 7/50

(54) **Method and system for digital coding 3D stereoscopic video images**

(62) Divisional of application: 04715595.7
(71) Applicant: Tdvision Corporation S.A. DE C.V., México, D.F. 02800 (MX)
(72) Inventor: Gutierrez Novelo, Manuel Rafael, DF 02800 Santa Maria (MX)
(74) Representative: Hewett, Jonathan Michael Richard

(57) **Abstract**

In order to obtain three-dimensional images from a digital video stream, certain modifications have been made to the current MPEG2 coders; software and hardware changes in different parts of the coding process are made.

In effect, the structures and the video_sequence of the video data stream are modified to include the necessary flags to identify at the bit level the TDVision® technology image type.

Regarding software, the modifications will be made in the following processes: video_sequence header, identification flags modification, data fields modification, and image fields modification.

Regarding hardware, an electronic comparison is made between the images of the left and right channels, the difference is processed as a B type image, i.e., an error correction is performed, the results are stored in a temporary buffer with the TDVision® technology identifier.

When the information is coded, a DSP is used to perform the prediction, comparison, quantization, and DCT function application processes in order to form the MPEG2-compatible compressed video stream.

## Description

### FIELD OF THE INVENTION

The present invention is related to stereoscopic video images display in the 3DVisor™ device and, particularly, to a video images coding method by means of a digital data compression system, which allows three-dimensional information storage, using standardized compression techniques.

### BACKGROUND OF THE INVENTION

Presently, data compression techniques are used in order to decrease the bits consumption in the representation of an image or a series of images. The standardization works were carried out by a group of experts of the International Standardization Organization. Presently, the methods are usually known as JPEG (Joint Photographic Expert Group), and MPEG (Moving Pictures Expert Group).

A common characteristic of these techniques is that the image blocks are processed by means of the application of a transform adequate for the block, usually known as Discrete Cosine Transform (DCT). The formed blocks are submitted to a quantization process, and then coded with a variable-length code.

The variable-length code is a reversible process, which allows the exact reconstruction of that which has been coded with the variable-length code.

The digital video display includes a certain number of image frames (30 to 96 fps) displayed or represented successively at a 30 to 75 Hz frequency. Each image frame is still an image formed by a pixels array, according to the display resolution of a particular system. By example, the VHS system has a display resolution of 320 columns and 480 rows, the NTSC system has a display resolution of 720 columns and 486 rows, and the high definition television system (HDTV) has a display resolution of 1360 columns and 1020 rows. In reference to a digitized form of low resolution, 320 columns by 480 rows VHS format, a two-hour long movie could be equivalent to 100 gigabytes of digital video information. In comparison, a conventional compact optical disk has an approximate capacity of 0.6 gigabytes, a magnetic hard disk has a 1-2 gigabyte capacity, and the present compact optical disks have a capacity of 8 or more gigabytes.

In response to the storage and transmission limitations for such a massive information quantity, several standard compression processes have been established. These video compression techniques use similar characteristics between successive image frames, referred as a temporal spatial correlation, in order to provide a frame-by-frame compression, which is based on the representation of pixels from frame to frame.

All images we watch at the cinema and TV screens are based on the principle of presenting complete images (static images, like photographs) at a great speed. When they are presented in a fast and sequential manner at a 30 frames per second speed (30 fps) we perceive them as an animated image due to the retention of the human eye.

In order to codify the images to be presented in a sequential manner and form video signals, each image needs to be divided in rows, where each line is in turn divided in picture elements or pixels, each pixel has two associated values, namely, luma and chroma. Luma represents the light intensity at each point, while luma represents the color as a function of a defined color space (RGB), which can be represented by three bytes.

The images are displayed on a screen in a horizontal-vertical raster, top to bottom and left to right and so on, cyclically. The number of lines and frequency of the display can change as a function of the format, such as NTSC, PAL, or SECAM.

It is theoretically possible to assign a value for each luma, chroma U and chroma V pixel, but this represents four bytes (one for chroma and three for color), which in NTSC 480 rows by 720 columns format and approximately 30 frames per second, it results in 4 X 480 X 720 X 30, approximately 40 Megabytes of memory per second, which is of difficult storage and transmission due to the available bandwidth. Currently, it has been able to reduce the chroma data in a 1:4 pixels; i.e., to take a color sample per each four pixels and replicate the same information for the missing three and the human being does not perceive the difference; the formats are, namely:
4: 4: 4 (four luma samples and four chroma samples in a 4 x 4 = 16 pixels group).
4: 2: 2 (four luma samples and two chroma samples in a 4 x 2 = 8 pixels group).
4: 1: 1 (four luma samples and one chroma sample in a 4 x 1 = 4 pixels group).
4: 2: 0 (eight luma samples, with two chroma samples between horizontal pixels in a 4 x 2 = 8 pixels group) in MPEG1.
4: 2: 0 (eight luma samples, with two chroma samples between vertical pixels in a 4 x 2 = 8 pixels group) in MPEG1.

Even when information is reduced in this manner, the necessary digital information quantity needed to store one second of information in an NTSC format, at a 4: 2: 0 quality is of 15 megabytes, or 108 gigabytes for a two hours file.

Several methods exist for three-dimensional scenes reconstruction from a bi-dimensional video sequence. In the light of the recent technology development and concerning the future, the MPEG4 standard tries to provide time-space related graphics coding media, which will be an important tool in stereoscopic images, design and manufacture of engineering applications. A virtual space is created where a geometrical model of the scene is reconstructed. For example, USP No. 6,661,914 granted to Cecile Dufour on December 9th, 2003, where a new three-dimensional reconstruction method is described, the scene succession has been taken with a simple camera, the contours of the image are reconstructed, the hidden parts depth in each view which are later projected and submitted to a refining process.

In the race for image processing, many make valuable contributions, e.g.: USP No. 6,636,644, granted to Itokawa on October 21st, 2003, which refers to an imaging process using MPEG4, where the chroma values image extending over the image boundaries are extracted, with this a greater efficiency is achieved in the coding and the natural color reproduction can be achieved in the image's contours.

Several methods and arrangements exist for coding video signals, such as USP No. 6,633,676, granted to Kleihorst et al., on October 14th, 2003, the method is applied to the coder detector in a camera system, video signals are coded with compensated motion (I.B.P.) and a high resolution image is generated, this image is an interpolation of the previous ones, in summary, the regions of greater interest are determined in the video signal, which together occupy less memory.

The image compression coding is essentially used for storing or transmitting digital images in an efficient manner, a method for compressed digital images coding uses DCT as it is a dominant technology in common standards such as JPEG and MPEG. USP No. 6,345,123, granted to Boon on February 5th, 2002, describes a method for digital image coding by transforming coefficients with the usual DCT method, applies the quantization process of said coefficients in order to transform them in a pre-written quantization scale and finally a variable length coding process is applied to the quantized and transformed coefficients comparing them to a variable length code table.

The image is divided in a plurality of small regions in order to be coded, the small regions are adjacent with each other, a sample is taken from a region and the environment of the next image region is predicted. This predictive coding method is used in USP No. 6,148,109, granted to Boon et al., on November 14th, 2000, where the generated image data of the difference between the small regions is coded and extracted.

USP No. 6,097,759, granted to Murakami et al. on August 1st, 2000, describes a by-block coding system for a field coded image. The block patterns include one individual blocks field and one non-interlaced block; also, the coding system investigates the odd and even fields movement in order to produce a compensated movement prediction signal; thus a high efficiency coding is provided.

Patents USP No. 5,978,515; 5,963,257; 5,815,601, granted to Katata et al., refer to an image coder for coding image data in a manner such that they enhance the image quality of a selected area in comparison to the other area, without increasing the data quantity used to describe it.

USP No. 5,579,413, granted to Gisle on November 26, 1996, describe a method for converting a data signal in an quantized image block and transforming it in a variable length coded data signal, where each event is represented as a three-dimensional quantity.

The need arises to use a data compression system which allows the storage of the same content in less space, an expert group was dedicated to the creation of a way of compressing information and displaying images; but without mentioning the implementation details, with the objective that all the software and hardware developers could create new forms of carrying out the process, given that they were compatible with MPEG. Currently, MPEG2 is a worldwide standard, widely used by television and video and audio related companies.

Audio and video are packaged in elemental packages (PES), said audio and video packages are interlaced together in order to create a MPEG2 data stream. Each package has a time identification (time stamp) for audio and video synchronizing at playback time, e.g., for every three video frames one audio frame is associated.

MPEG has two different methods for interlacing video and audio in the system's streams:

The transport stream is used in systems with a greater error possibility, such as satellite systems, which are susceptible to interference. Each package is 188 bytes long, starting with an identification header, which makes recognizing gaps and repairing errors possible. Various audio and video programs can be transmitted over the transport stream simultaneously on a single transport stream; due to the header, they can be independently and individually decoded and integrated into many programs.

The program stream is used in systems with a lesser error possibility, as in DVD playing. In this case, the packages have a variable-length and a size substantially greater than the packages used in the transport stream. As a main characteristic, the program stream allows only a single program content.

The video system under the MPEG2 standard allows the coding of interlaced type and progressive type video images.

Namely, the progressive video scheme is stored in a full frame (frame picture, fp), and in the interlaced video scheme it can be stored in two ways, by full frame image (frame picture) or by field images (field picture).

In the compression scheme three MPEG2 format images exist:
Intracoded (I), their information is coded as a function of the image's own internal data.

Predictive-Coded (P), its information depends solely on data located in other future time point.

Bi-Directionally Predictive Coded (B), its information depends on data located in the past and the future.

In turn, there are three compression types, which are applied to the packages above, e.g. time prediction, compression, and space compression.

Predictive compression in time refers to two different frames in time, but which have a motion associated, taking advantage of the fact that the images between frames vary little.

Spatial compression compacts the information located within one same frame (Intracoded), e.g., in a 100 x 100 pixels image with 3 bytes for color and 1 for luma, if it is desired to store this information 40 kilobytes per frame are needed; on the contrary, if this image is completely white, it could be represented as a color: 255R, 255G, 255B, Xstart=0, Ystart=0 , Xend=99, Yend=99, this would indicate that this whole area is white; instead of using 40 kilobytes, only 7 or 8 are used. Thus MPEG compression is achieved; the process steps are complicated and are out of the scope of the present invention.

Type (I) images are self-contained, they do not refer to any previous or later image, so the compression is not used in the time prediction, but only as a function of its own space instead.

Type (P) images are based on a reference image in order to code themselves, so they use time prediction compression and also space compression. These images can refer to an (I) type image or to other (P) type image, but it uses only one image reference image.

(B) type images require two previous and later references in order to be reconstructed, this type of images has the best compression index. The references to obtain a (B) type image can only be of (P) or (I) type, never of (B) type.

The coding and decoding sequences are different.'

In order to decrease the information volume the complete image is divided in a full frame of a unit called macroblock; each macroblock is comprised by a division of 16 pixels x 16 pixels, it is ordered and denominated top to bottom and left to right, creating a macroblocks matrix array on screen, the macroblocks are sent in the information stream in an ordered sequential manner, i.e. 0, 1, 2, 3, ... n.

The macroblocks having an (I) type image are self-contained only in spatial compression; the (P) type images can contain (P) type macroblocks in order to refer to the previous images, with the possibility of being intracoded macroblocks (interlaced macroblocks) without limits.

(B) type images can also be formed by macroblocks of intracoded (interlaced) type, which refer to a previous image, a later image, or both.

In turn, macroblocks are divided in blocks, one block is an 8 x 8 data or sample matrix; due to the form in which the chroma format is classified the 4: 4: 4 format requires one luma sample Y, one chroma sample Cr, one chroma sample Cb, therefore a 4: 4: 4 format macroblock needs 12 blocks per macroblock, in the 4: 2: 0 format 6 blocks per macroblock are required.

A set of consecutive macroblocks represents a slice; there can be any number of macroblocks in a slice, they must belong to a single row, in the same way than the macroblocks, the slices are denominated from left to right and top to bottom. Slices do not have to cover all the image, as a coded image does not need samples for each pixel.

Some MPEG profiles require a rigid slices structure, in which the image must be fully met. The use of the adequate hardware and software algorithms combination allows the MPEG images compression.

The coded data are bytes with block-specific information, macroblocks, fields, frames, images and MPEG2 format video.

The information must be grouped by blocks, and the results obtained from the information coding, e.g., (VLC), is a linear bits-bytes stream.

Where the VLC (Variable Length Decoder) is a compression algorithm in which the most frequent patterns are replaced by shorter codes and those occurring less frequently are replaced by longer codes. The compressed version of this information occupies less space and can be transmitted faster by networks. However, it is not an easily editable format and requires decompression using a look-up table.

Inverse scan, the information must be grouped by blocks, and what is obtained when coding the information by means of the VLC is a linear stream. The blocks are 8x8 data matrixes, so it is necessary to convert the linear information in a square 8x8 matrix. This is made in a descending zigzag manner, top to bottom and left to right in both sequence types, depending on whether it is a progressive image or an interlaced image.

Inverse Quantization, consists simply in multiplying each data value by a factor. When coded, most of the data in the blocks is quantized to remove information that the human eye is not able to perceive, the quantization allows to obtain a greater MPEG2 stream conversion, and it is also required to perform the inverse process (Inverse quantization) in the decoding process.

MPEG video sequence structure: This is the maximum structure used in the MPEG2 format and has the following format:
Video sequence (Video_Sequence)
Sequence header (Sequence_Header)
Sequence extension (Sequence_Extension)
User Data (0) and Extension (Extension_and_User_Data (0))
Image group header (Group_of_Picture_Header)
User Data (1) and Extension (Extension_and_User_Data (1)) Image header (Picture_Header)
Coded image extension (Picture_Coding_Extension)
User Data (2) and Extensions (Extension_and_User_Data (2)) Image Data (Picture_Data)
Slice(Slice)
Macroblock (Macroblock)
Motion vectors (Motion_Vectors)
Coded Block Pattern (Coded_Block_Pattern)
Block (Block)
Final Sequence Code (Sequence_end_Code)

The video sequence is comprised of these structures, a video sequence is applied for MPEG1 and MPEG2 formats, in order to differentiate each version it must be validated that immediately after the sequence header, the sequence extension is present; should the sequence extension not follow the header, then the stream is a MPEG1 format video stream.

### BRIEF DESCRIPTION OF THE INVENTION

It is an object of the present invention to provide a stereoscopic 3D-images digital coding method and system, which provides coded data for the transmission, reception and display in 3Dvisors®.

It is another object of the present invention to provide a coding scheme in which the video data stream video_sequence structures are modified and identification flags are included at the bit level.

It is still an object of the present invention to provide a 3D-images digital coding software process, in a manner such that the video_sequence, identification flags, data fields, and image fields are modified.

It is still an object of the present invention to provide a 3D-images digital coding hardware process, in a manner such that the electronic comparison between the left and right channels is made, the error correction of the difference between images is made, the processed image is stored in the video_sequence with the TDVision® technology identifier.

It is still an object of the present invention to provide a 3D-images digital coding hardware process, in such a way that the input buffer memory of the DSP is doubled, the simultaneous input of two independent video signals is available and the DSP is enabled to compare the input buffers of both video signals.

### BRIEF DESCRIPTION OF THE FIGURES

Figure 1 represents the hardware and software changes for the stereoscopic 3D-video image coding.
Figure 2 represents the compilation process for MPEG2-4 compatible stereoscopic 3D-video image.
Figure 3 represents the software format for the compilation of MPEG2-4 compatible stereoscopic 3D-video image.
Figure 4 represents the hardware format for the compilation of MPEG2-4 compatible stereoscopic 3D-video image.
Figure 5 represents the map of the technology branch to which the coder of the present invention belongs: namely, stereoscopic 3D-image processing, its coding, decoding, transmission via cable, satellite and DVD, HDTV and 3DVisors® display.

### DETAILED DESCRIPTION OF THE INVENTION

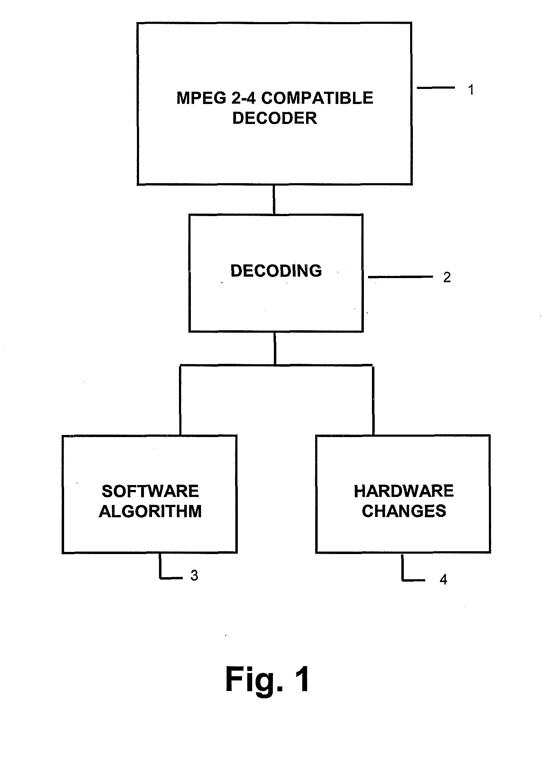

With the objective of obtaining three-dimensional images from a digital video stream, modifications have been made to the current MPEG2 coders by making changes in hardware and software in different parts of the coding process. As shown in Figure 1, the MPEG2-4 compatible TDVision® coder (1) has its own coding process (2) achieved through software (3) and hardware (4) changes.

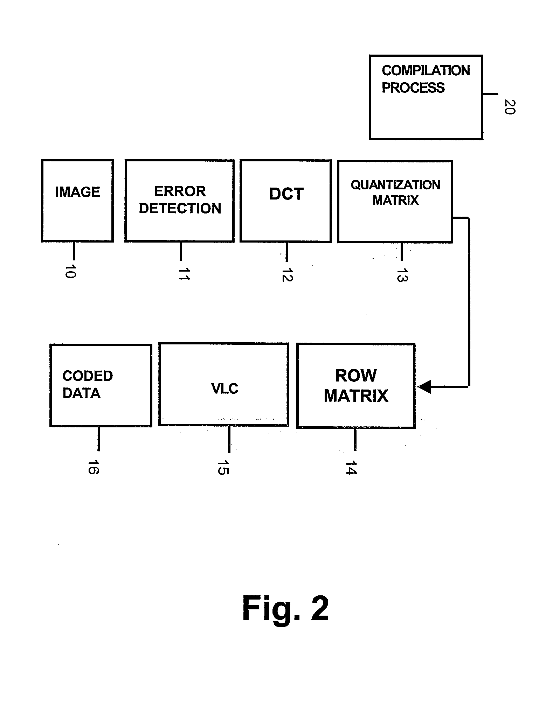

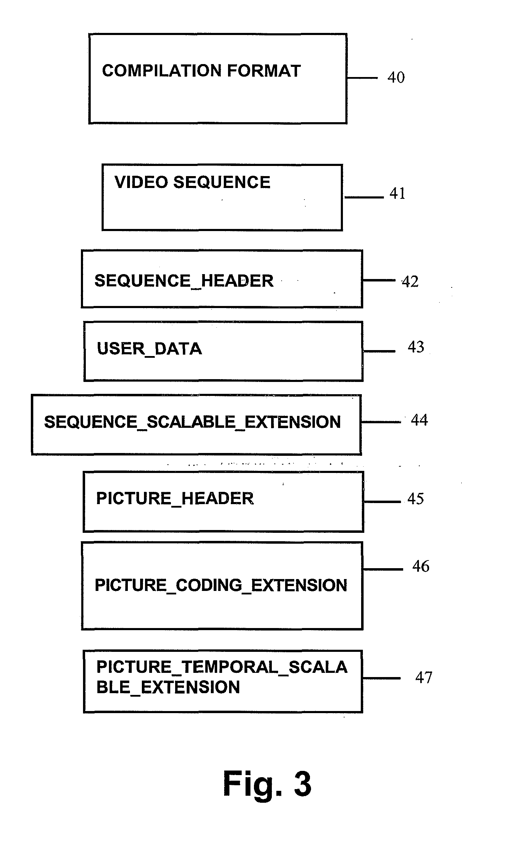

In figure 2, the compilation process of the coder object of the present invention is shown, actually, the image (10) is taken and is submitted to a motion compensation and error detection process (11); the discrete cosine transform function is applied to change frequency parameters (12), then the quantization matrix (13) is applied in order to carry out a normalization process, the matrix to row conversion process (14) is applied, here the possibility of carrying out the variable length coding (15) exists and, finally, the video sequence with coded data (16) is obtained. In order to carry out this compilation process a format (30, Fig. 3) or MPEG2 compatible 3D-image compilation method must be followed, actually, as it is shown in figure 3, the video_sequence (31) must be modified in the sequence_header (32), user_data (33), sequence_scalable_extension (34), picture_header (35), picture_coding_extension (36) and picture_temporal_scalable_extension (37) structure, thus obtaining a compilation format appropriate for stereoscopic 3D-digital image taken with a TDVision® stereoscopic camera.

The structures and the video_sequence of the video data stream must be modified to include the necessary flags to identify at the bit level the TDVision® technology coded image type.

The modifications are made in the following coding stages, i.e., when coding the dual image in MPEG2 (software); when coding the image by hardware.

### Software:

The video_sequence headers are modified.

The identification flags are identified.

The data fields are modified.

The image fields are modified.

### Hardware:

An electronic comparison is made between the left and right channels.

The difference is processed as a B type image (error correction). Then it is stored with the TDVision® identifier.

The change is applied to the complementary buffer.

The results are saved and stored in the secondary buffer.

Actually, the Input memory of the DSP buffer is doubled; the simultaneous input of two independent video signals corresponding to the stereoscopic left-right existing signal from a stereoscopic TDVision® camera is allowed; the DSP is enabled to compare the input buffers for both video signals.

The hardware coding process is carried out in a normal MPEG2 manner as a function of a single video input channel, both signals (left and right) are taken and electronically compared, the difference of the comparison between left and right signals is obtained, said difference is stored in a temporary buffer, the error correction is calculated in LUMA and CHROMA in relation to the left signal; the DCT (Discrete Cosine Transform) function is applied, and the information is stored in a B type block:
a) Within the USER_DATA()(SW) identification structure
b) Within the PICTURE_DATA3D() structure
Continue in the next frame.

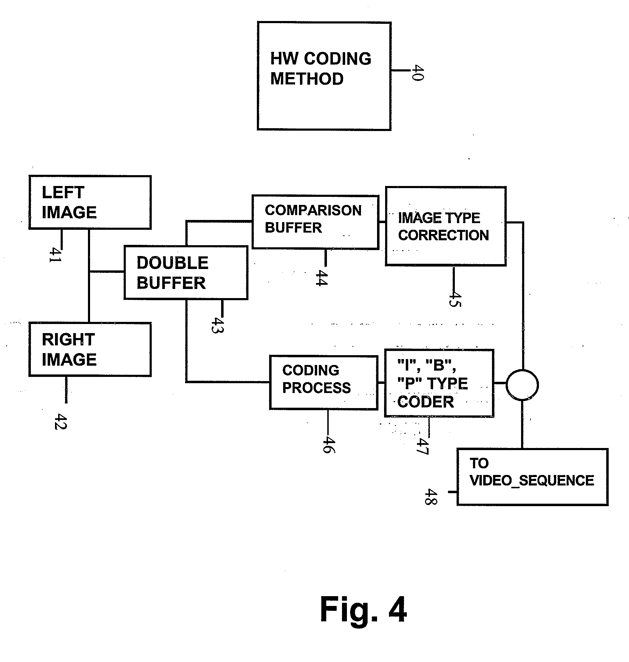

Hardware is represented in the block diagram in Figure 4, actually, the left signal (41) and the right signal (42) are taken, both signals are stored in the temporary buffer (43), the difference between left and right signals is compared, the error differential is calculated and the information is stored (45), the correct image is coded (46), the coding is carried out as an "I", "B" or "P" type image (47) and is finally stored in the video_sequence (48).

It is essential to duplicate the memory to be handled by the DSP and have the possibility of disposing of up to 8 output buffers, which allow the previous and simultaneous representation of a stereoscopic image on a device such as TDVision®'s 3DVisor®

Actually, two channels must be initialized when calling the programming API of Texas Instruments TMS320C62X DSP.

MPEG2VDEC_create (const IMPEG2VDEC_fxns*fxns, const MEPG2VDEC_Params* params).

Where IMPEG2VDEC_fxns y MEPG2VDEC_Params are pointer structures defining the operation parameters for each video channel, e.g.:
3DLhandle = MPEG2VDEC_create(fxns3DLEFT,Params3DLEFT).
3DRhandle = MPEG2VDEC_create(fxns3DRIGHT,Params3DRIGHT).

Thereby enabling two video channels to be decoded and obtaining two video handlers, one for the left-right stereoscopic channel.

A double display output buffer is needed and by means of software, it will be defined which of the two buffers must display the output by calling the AP function:
Namely, MPEG2VDEC_APPLY(3DRhandle, inputR1, inputR2, inputR3, 3doutright_pb, 3doutright_fb).
MPEG2VDEC_APPLY(3DLhandle, inputL1, inputL2, inputL3, 3doutleft_pb, 3doutleft_fb).

Where 3DLhandle is the pointer to the handle returned by the create function of the DSP, the input1 parameter is the FUNC_DECODE_FRAME or FUNC_START_PARA address, input2 is the pointer to the external input buffer address, and input3 is the size of the external input buffer size.

3doutleft_pb is the address of the parameter buffer and 3doutleft_fb is the beginning of the output buffer where the decoded image will be stored.

The timecode and timestamp will be used for output to the final device in a sequential, synchronized manner.

The integration of software and hardware processes is carried out by devices known as DSP, which execute most of the hardware process. These DSP are programmed by a C and Assembly language hybrid provided by the manufacturer. Each DSP has its own API, consisting of a functions list or procedure calls located in the DSP and called by software.

With this reference information, the present application for MPEG2 format-compatible 3D-image coding is made.

Actually, at the beginning of a video sequence, the sequence header and the sequence extension always appear. The repetitions of the sequence extension must be identical to the first. On the contrary, the sequence header repetitions vary a little as compared to the first occurrence, only the portion defining the quantization matrixes should change. Having sequence repetitions allows a random access to the video stream, i.e., should the decoder start playback at the middle of the video stream it would be possible to do this, it only has to search the previous sequence header and the sequence extension to be able to decode the following images in the video stream. This also happens for video streams that could not start from the beginning, such as a satellite decoder turned on when the program has already stared.

Namely, the sequence header provides a higher information level on the video stream, for clarity purposes the number of bits corresponding to each is also indicated, the most significative bits are located within the sequence extension (Sequence_Extension) structure, it is formed by the following structures:

### Sequense_Header

| **Field** | **# bits** | **Description** |
|---|---|---|
| Secuence_Header_Code | 32 | Sequence_Header Start 0x00001B3 |
| Horizontal_Size_Value | 12 | 12 less significative bits for width |
| Vertical Size Value | 12 | 12 less significative bits for height |
| **Aspect Ratio Information** | 4 | image aspect |
| | | 0000 forbidden |
| | | 0001 n/a TDVision® |
| | | 0010 4:3 TDVision® |
| | | 0011 16:9 TDVision® |
| | | 0100 2.21:1 TDVision® |
| | | 0111 will execute a logical "and" in order to obtain backward compatibility with 2D systems. |
| | | 0101...1111 reserved |
| **Frame rate code** | 4 | 0000 forbidden |
| | | 0001 24,000/1001 (23.976) in TDVision® format |
| | | 0010 24 in TDVision® format |
| | | 0011 25 " |
| | | 0100 30,000/1001 (29.97) " |
| | | 0101 30 " |
| | | 011050 " |
| | | 0111 60,000/1001 (59.94) "(a logical "and" will be executed in order to obtain backward compatibility with 2D systems.) |
| | | 1 000 60 |
| | | 1111 reserved |
| Bit_rate_value | 18 | The 18 less significative bits of the video_stream bit rate (bit_rate = 400 x bit_rate_value + bit_rate_extension<< 18) the most significative bits are located within the sequence_extension structure. |
| Marker_bit | 1 | Always 1 (prevents start_code failure). |
| Vbv_buffer_size_value | 10 | The 10 less significative bits of vbv_buffer_size, which determines the size of the video buffering verifier (VBV), a structure used to ensure that a data stream can be used decoding a limited size buffer without exceeding or leaving too much free space in the buffer. |
| Constrained_parameters_flag | 1 | Always 0, not used in MPEG2. |
| Load_intra_quantizer_matrix | 1 | Indicates if an intra-coded quantization matrix is available. |
| If load_intra_quantizer_matrix | | |
| Non_intra_quantizer_matrix(64) | 8x64 | If a quantization matrix is indicated, then it must be specified here, it is a 8x64 matrix. |
| Load_non_intra_quantizer_matrix | 1 | If a non-intra-quantized matrix is available, then this flag must be activated. |
| If load_non_intra_quantizer_matrix | | |
| Non_intra_quantizer_matrix (64) | 8x64 | If the previous flag is activated, the 8x64 data forming the quantized matrix are stored here. |
| **Sequence_extension** | | |

| Field | # bits | Description |
|---|---|---|
| Extension_Start_Code | 32 | Start, sequence_extension, always 0x000001B5 |
| Extension_Start_code_Identifier | 4 | Identified by extension type 0x1 |
| Profile_and_level_indication | 8 | Defines the profile and the video stream level |
| Progressive_sequence | 1 | 1= frames, 0 = frames and field |
| Chroma_format | 2 | 00 reserved |
| | | 01 4:2:0 |
| | | 10 4:2:2 |
| | | 11 4:4:4 |
| Horizontal_size_extension | 2 | sequence_header extension |
| Vertical_size_extension | 2 | sequence_header extension |
| Bit_rate_extension | 12 | sequence_header extension |
| Marker_bit | 1 | Always 1 |
| Vbv_buffer_size_extension | 8 | sequence_header extension |
| Low_delay | 1 | 1 = Does not have B type images, and can also cause an under-utilization of the VBV buffer during normal playback (known as BIG images) |
| | | 0 = can contain B type images; but it cannot have BIG images, it cannot cause an under-utilization of the VBV buffer. |
| Frame_rate_extension_n | 2 | |
| Frame_rate_extension_d | 5 | |
| Next_start_code() | | |

### Extension and user data (i)

It is a container for storing other structures and does not have its own data, basically it is a series of extension_data(1) and user_data () structures, in some cases the structure can be completely empty.

### Extension_data (i)

This structure contains a simple structure extension. The extension structure type contained depends on the value of (i), which can have the value of 1 or 2. If it is equal to "0", then the data_extension follows a sequence_extension and the extension_data(i) can contain both: one sequence_display_extension or one sequence_scalable_extension.

If i = 2, then the structure follows a picture_coding_extension, which can contain a quant_matrix_extension(), copyright_extension(), picture_display_extension(), picture_spatial_scalable_extension() or one picture_temporal_scalable_extension. This structure always starts with 0x000001B5.

### User_data

The user_data structure allows the specific data for an application to be stored within the video sequence (video_sequence). The MPEG2 specification does not define the format of this function or that of the user data. The structure starts with user_data_start_code = 0x000001B5, and contains an arbitrary number of data (user_data) which continues until the next start code in the data stream (stream). The only condition is that it does not have more than 23 consecutive zeros, as it could be interpreted as a start code.

### Sequence_display_extension()

This structure provides information not used in the decoding process, information referring to the coded content, which is useful to correctly display, the decoded video.

### Sequence_display_extension()

| Field | bits # | Description |
|---|---|---|
| Extension_start_code_identifier | 4 | Must be 2, identifies the start |
| Video_format | 3 | 000 components |
| | | 001 PAL |
| | | 010 NTSC |
| | | 011 SECAM |
| | | 100 MAC |
| | | 101 Unspecified |
| | | 110 Reserved, TDVision® |
| | | 111 Reserved, TDVision® |
| Color_description | 1 | 0 = does not specify color parameters. |
| | | 1 = contains the following |
| | | 3 color parameters. |
| Color_rprimaries | 8 | 0 forbidden |
| | | 1 ITU-R-BT.709 recommendation |
| | | 2 unspecified video |
| | | 3 reserved |
| | | 4 ITU-R-BT.470-2 SYSTEM M recommendation |
| | | 5 ITU-R-BT.470-2 recommendation SYSTEM B,G |
| | | 6 SMPTE 170M |
| | | 7 SMPTE 240M |
| | | 8 ― 255 reserved |
| Transfer_characteristics | 8 | 0 forbidden |
| | | 1 ITU-RBT.709 recommendation |
| | | 2 unspecified video |
| | | 3 reserved |
| | | 4 ITU-R-BT.470-2 SYSTEM M recommendation |
| | | 5 ITU-R-BT.470-2 SYSTEM B,G recommendation |
| | | 6 SMPTE 170M |
| | | 7 SMPTE 240M |
| | | 8 real transference characteristics |
| | | 255 reserved |
| Matrix_coefficients | 8 | 0 forbidden |
| | | 1 ITU-RBT8709 recommendation |
| | | 2 unspecified video |
| | | 3 reserved |
| | | 4 FCC |
| | | 5 ITU-R-BT.470-2 SYSTEM B,G recommendation |
| | | 6 SMPTE 170M |
| | | 7 SMPTE 240M |
| | | 8 ― 255 reserved |
| Display_horizontal_style | 14 | Not specified in MPEG2 |
| Marker_bit | 1 | Always 1 |
| Display_vertical_size | 14 | Not specified in MPEG2 |
| Next_start_code | | |

### Sequence_scalable_extension

This structure must be present in every scalable video stream, which is that containing a base layer and one or more enhancement layers. There area different types of MPEG2 scalability, an example of scalability for the main layer is that it contains the standard definition of the video content, while the extension layer has additional data, which increase the definition.

### Sequence_scalable_extension

| Description | bits # | Description |
|---|---|---|
| Extension_start_code_identifier | 4 | Always 5 |
| Scalable_mode | 2 | 00 partitioned data |
| | | 01 spatial scalability |
| | | 10 SNR scalable |
| | | 11 temporary scalability |
| Layer_id | 4 | Layer number (0) |
| Lower_layer_prediction_horizontal_size | 14 | |
| Marker_bit | 1 | |
| Lower_layer_prediction_vertical_size | 14 | |
| Horizontal_subsampling_factor_m | 5 | |
| Horizontal_subsampling_factor_n | 5 | |
| Vertical_subsampling_factor_m | 5 | |
| Vertical_subsampling_factor_n | 5 | |
| Picture_mux_enable | 1 | |
| Mux_to_progressive_sequence | 1 | |
| Picture_mux_order | 3 | |
| Picture_mux_factor | 3 | |
| Group_of_pictures_header() | | |
| This structure marks the start of an images group. | | |
| **Group_of_pictures_header()** | | |

| Field | bits # | Description |
|---|---|---|
| Group_start_code 32 | | 0x000001B8 |
| Time_code 25 | | Timestamp for the first |
| | | image preceding the group_of_picture_header |
| | | Dromp_frame_flag-1 |
| | | Time_code_hours-5 |
| | | Time_code_minutes-6 |
| | | Marker_bit-1 |
| | | Time_code_seconds-6 |
| | | Time_code_pictures-6 |
| Closed_gop | 1 | If 1 = B image, does not refer to previous images |
| Broken_link | 1 | 1= indicates a missing I type frame which does not exist anymore |
| | | 0= the link is not broken |
| Next_start_code() | | |

| **Picture_header** | | |
|---|---|---|
| Field | bits # | Description |
| Picture_start_code | 32 | 0x00000100 |
| Temporal_reference | 10 | Images display order |
| Picture_coding_type 3 | | 0000 forbidden |
| | | 001 intra-coded (I) |
| | | 010 predictive-coded (P) |
| | | 011(B) bidirectional_predictive_coded |
| | | 100 reserved for MPEG1 |
| | | 101 reserved |
| | | 110 reserved |
| | | 111 reserved |
| Vbv_delay | 16 | video buffer verification mechanism (temporal memory) |
| Full_pel_forward_vector | 1 | used in MPEG1 |
| | | MPEG2 = 0 |
| Forward_f_code | 3 | used in MPEG1 |
| | | MPEG2 = 111 |
| Full_pel_backward_vector | 1 | used in MPEG1 |
| | | MPEG2 = 0 |
| Backward_f_code | 3 | used in MPEG1 |
| | | MPEG2 = 111 |
| Extra_bit_picture | 1 | Can be ignored |
| Extra_information_picture | 8 | Can be ignored |
| Extra_bit_picture | 1 | Can be ignored |
| Extra_start_code | | |

### Picture_coding_extension

| Field | bits # | Description |
|---|---|---|
| Extension_start_code | 32 | Always 0x000001B5 |
| Extension_start_code_identifier | 4 | Always 1000 |
| F_code(0)(0) | 4 | Used to decode motion vectors; when it is a type I image, this data is filled with 1111. |
| F_code(0)(1) | 4 | |
| F_code(1)(0) backwards | 4 | Decoding information in motion vectors (B), when it is a (P) type image it must be set to 1111, because there is no backward movement. |
| F_code(1)(1) backwards | 4 | Decoding information in motion vectors, when it is a P type image it must be set to 1111, because there is no backward movement. |
| Intra_dc_precision | 2 | precision used in the inverse quantizing of the coefficients |
| | | of the DC discrete cosine transform. |
| | | 00 8 bits precision |
| | | 01 9 bits precision |
| | | 10 10 bits precision |
| | | 11 11 bits precision |
| Picture_structure | 2 | Specifies if the image is divided in fields or in a full frame. |
| | | 00 reserved (image in TDVision® format) |
| | | 01 top field |
| | | 10 bottom field |
| | | 11 by-frame image |
| Top_field_first | 1 | 0= decode bottom field first |
| | | 1= decode top field first |
| Frame_pred_frame_dct | 1 | |
| Concealment_motion_vectors | 1 | |
| Q_scale_type | 1 | |
| Intra_vic_format | 1 | |
| Alternate_scan | 1 | |
| Repeat_first_field | 1 | 0= display a progressive frame |
| | | 1= display two identical progressive frames |
| Chroma_420_type then | 1 | If the chroma format is 4:2:0, it must be equal to progressive_frame, otherwise it must be equal to zero. |
| Progressive_frame | 1 | 0= interlaced |
| | | 1= progressive |
| Composite_display_flag | 1 | warns about the originally coded information |
| V_axis | 1 | |
| Field_sequence | 3 | |
| Sub_carrier | 1 | |
| Burst_amplitude | 7 | |
| Sub_carrier_phase | | 8 |
| Next_start_code() | | |

### Picture_temporal_scalable_extension()

Two spatial resolution streams exist in case of having temporal scalability, the bottom layer provides a lesser index version of the video frames, while the top layer can be used to derive a greater index version of frames of the same video. The temporal scalability can be used by low quality, low cost or free decoders, while the greater frames per second would be used for a fee.

### Picture_temporal_scalable_extension()

| Field | bits # | Definition |
|---|---|---|
| Extension_start_code_identifier | 4 | Always 1010 |
| Reference_select_code | 2 | It is used to indicate that the reference image will be used to decode intra_coded images |
| | | FOR O TYPE IMAGES |
| | | 00 enhances the most recent images |
| | | 01 the lower and most recent frame layer in display order |
| | | 10 next layer under frame in display order |
| | | 11 forbidden. |
| | | FOR B TYPE IMAGES |
| | | 00 forbidden |
| | | 01 most recently decoded images in enhanced mode |
| | | 10 most recently decoded images in enhanced mode |
| | | 11 most recent image in the bottom layer in display order |
| Forward_temporal_reference | 10 | Temporal reference |
| Marker_bit | 1 | |
| Backward_temporal_reference | 10 | Temporal reference |
| Next_star_code() | | |

### Picture_spatial_scalable_extension()

In the case of image spatial scalability, the enhancement layer contains data, which allow a better resolution of the base layer so it can be reconstructed. When an enhancement layer is used as a function of a base layer as a reference for the motion compensation, then the bottom layer must be escalated and offset in order to obtain greater resolution of the enhancement layer.

### Picture_spatial_scalable_extension()

| Field | bits # | Definition |
|---|---|---|
| Extension_start_code_identifier | 4 | Always 1001 |
| Lower_layer_temporal_reference | 10 | Reference to the lower layer's temporal image |
| Marker_bit | 1 | 1 |
| Lower_layer_horizontal_offset | 15 | Horizontal compensation (Offset) |
| Marker bit | 1 | 1 |
| Lower_layer_veretical_offset | 15 | Vertical compensation (Offset) |
| Spatial_temporal_weight_code_table_index | 2 | Prediction details |
| Lower_layer_progressive_frame | 1 | 1= progressive |
| | | 0= interlaced |
| Lower_layer_desinterlaced_field_select | 1 | 0= top field is used |
| | | 1= the bottom field is used |
| Next_start_code() | | |
| Copyright_extension() | | |
| Extension_start_code_identifier | 4 | Always 010 |
| Copyright_flag | 1 | if it is equal to 1 then it uses copyright |
| | | If it is zero (0), no additional copyright information is needed |
| Copyright_identifier | 8 | 1 = original |
| | | 0= copy |
| Original_or_copy | 1 | |
| Reserved | 7 | |
| Marker_bit | 1 | |
| Copyright_number_1 | 20 | Number granted by copyright instance |
| Marker_bit | 1 | |
| Copyright_number_2 | 22 | Number granted by copyright instance |
| Marker_bit | 1 | |
| Copyright_number_3 | 22 | Number granted by copyright instance |

Next_start_code()
Picture_data()
This is a simple structure, it does not have field in itself.
Slice()

Contains information on one or more macroblocks in the same vertical position.

| | | |
|---|---|---|
| Slice_start_code | 32 | |
| Slice_vertical_position_extension | 3 | |
| Priority_breakpoint | 7 | |
| Quantizer_scale_code | 5 | |
| Intra_slice_flag | 1 | |
| Intra_slice | 1 | |

| | | |
|---|---|---|
| Reserved_bits | 7 | |
| Extra_bit_slice | 1 | |
| Extra_information_slice | 8 | |
| Extra_bit_slice | 1 | |
| Macroblock() | | |
| Macroblock_modes() | | |
| Motion_vectors() | | |
| Motion_vector() | | |
| Coded_block_pattern() | | |
| Block() | | |

### EXTENSION_AND_USER_DATA(2)

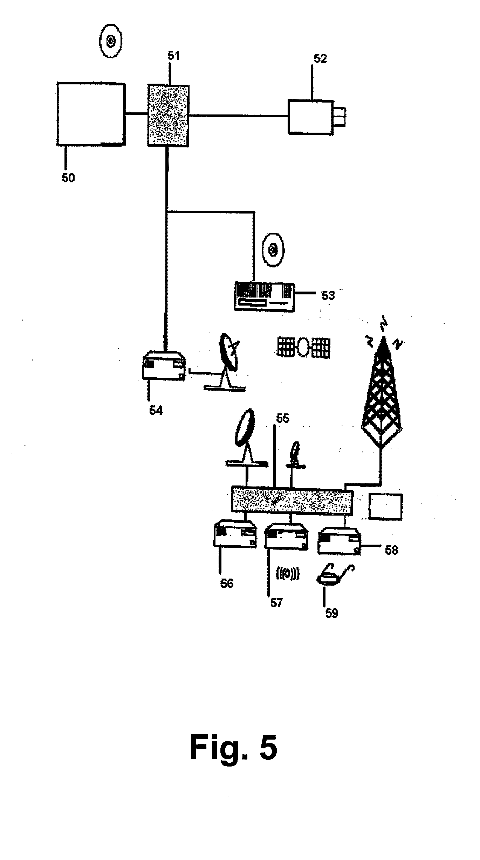

This MPEG2 compatible coding process is currently used to code 3D-digital images taken with the stereoscopic camera (52) of Fig. 5, which then are passed through the compiler (51) and then a signal can be obtained to display it in a PC (50), a DVD (53); when the signal in the decoder (54) is coded, it can be sent in a decoder (55) for the image to be displayed via cable (56), satellite (57), high definition television (59) (HDTV), or in a 3DVisor® device(59), etc. Thus, the image can be displayed on:
DVD (Digital Versatile Disks)
DTV (Digital Television)
HDTV (High Definition Television)
CABLE (DVB Digital Video Broadcast)
SATELLITE (DSS Digital Satellite Systems); and it is the software and hardware process integration.

Regarding hardware, most of the process is executed by devices known as DSP (Digital Signal Processors). Namely, one Motorola model and one Texas Instruments (TMS320C62X) model.

These DSP are programmed by a hybrid language from C and Assembly languages, provided by the manufacturer in question. Each DSP has its own API, consisting of a functions list or procedure calls located in the DSP to be called by software. From this reference information, the 3D-images are coded, which are compatible with the MPEG2 format and with their own coding algorithm. When the information is coded, the DSP is in charge of running the prediction, comparison, quantization, and DCT function application processes in order to form the MPEG2 compressed video stream.

Particular embodiments of the invention have been illustrated and described, it will be obvious for those skilled in the art that several modifications or changes can be made without departing from the scope of the present invention. All such modifications and changes are intended to be covered by the following claims, so that all changes and modifications fall within the scope of the present invention.

## Claims

1. A stereoscopic digital coding system for coding stereoscopic left and right eye signals that are compatible with 2D and 3D decoders, comprising:
a coder configured to:
electronically compare left and right signals of an image to obtain their difference, wherein the difference is calculated in luma and chroma;
storing the difference as a B type block in a structure within a video sequence, wherein the video sequence has a header for the structure; and
storing a three dimensional identifier in the header which indicates that the video sequence is a stereoscopic video.

2. The stereoscopic digital coding system of claim 1, wherein the coder is part of a digital signal processer.

3. The stereoscopic digital coding system of claim 1 or claim 2, wherein storing the difference comprises storing the difference to a temporary buffer.

4. The stereoscopic digital coding system of any one of claims 1 to 3, wherein the video sequence comprises a plurality of video streams.

5. The stereoscopic digital coding system of any one of the preceding claims, wherein the structure is a PICTURE_DATA₃D() structure.

6. The stereoscopic digital coding system of any one of the preceding claims, wherein the three dimensional identifier is a TDVision identifier stored in the header.

7. The stereoscopic digital coding system of any one of the preceding claims, wherein the video sequence is compatible with MPEG₂ video decoders.

8. A method of coding stereoscopic left and right eye signals that are compatible with 2D and 3D decoders, comprising:
electronically comparing left and right signals of an image to obtain their difference, wherein the difference is calculated in luma and chroma;
storing the difference as a B type block in a structure within a video sequence, wherein the video sequence has a header for the structure; and
storing a three dimensional identifier in the header which indicates that the video sequence is a stereoscopic video.

9. The method of claim 8, wherein the coder is part of a digital signal processer.

10. The method of claim 8 or claim 9, wherein storing the difference comprises storing the difference to a temporary buffer.

11. The method of any one of claims 8 to 10, wherein the structure is the USER_DATA() identification structure within the video sequence.

12. The method of any one of claims 8 to 11, wherein the structure is a PICTURE_DATA₃D() structure.

13. The method of any one of claims 8 to 12, wherein the three dimensional identifier is a TDVision identifier stored in the header.

14. The method of any one of claims 8 to 13, wherein the video sequence is compatible with MPEG₂ video decoders.

15. The method of any one of claims 8 to 14 wherein the video sequence comprises a plurality of video streams.
